# EUROPEAN PATENT APPLICATION

(11) **EP 1 900 641 A2**
(43) Date of publication of application: **19.03.2008**
(21) Application number: 07253608.9
(22) Date of filing: 11.09.2007
(51) Int. Cl.: B65B 25/04

(54) **System for packaging minimally processed fresh vegetable products**

(30) Priority: 13.09.2006 ES 200602323
(71) Applicant: Centro Nacional De Tecnologia Y Seguridad Alimentaria. Laboratorio Dei Ebro, 31570 San Adrian, Navarra (ES)
(72) Inventor: Navarro Ruiz Pedro Manuel, 31006 Pamplona (ES); Yaben Arostegui Amala, 31007 Pamplona (ES); Gutierrez Madorran,Luis, 26500 Calahorra (ES); Gonzalez Navarro Carlos, 31011 Pamplona (ES); Irigoyen Moriana Aurora, 31001 Pamplona (ES); Ortigosa Ocon Maria, 31007 Pamplona (ES); Torre Hernandez Ma Paloma, 31010 Baranain (ES)
(74) Representative: Evens, Paul Jonathan

(57) **Abstract**

The invention relates to a system for packaging minimally processed fresh vegetable products, according to which the application products are covered with a laminar wrapping provided with a certain permeability to gases, inside which the products are housed immersed in a modified atmosphere formed by nitrogen (N₂), carbon dioxide (CO₂) and oxygen (O₂).

## Description

### Field of the Art

The present invention relates to the preservation of vegetable products, proposing a packaging system which allows extending the duration of minimally processed fresh products, maintaining their initial properties.

### State of the Art

Certain vegetable products, such as fruit, vegetables and particularly asparagus, are very susceptible to oxidation when they are peeled, therefore the preservation of said products in these conditions is reduced to a very small time period, and must be consumed within a period that does not generally exceed three or four days, which conditions the marketing and raises the cost.

A solution to prevent oxidation is vacuum packaging, but a total lack of oxygen favors the proliferation of bacteria causing a microbial or organoleptic alteration which makes it consumption impossible. Therefore, this technique does not solve the problem in a practical manner for said products, because the time period which these products can be maintained in suitable consumption conditions is still very short.

### Object of the Invention

According to the invention, a packaging system is proposed which allows solving the problem of preserving minimally processed fresh vegetable products, such as asparagus and other products, in a much more practical manner, substantially extending the marketing period of the product.

This system object of the invention consists of covering the application products with a laminar wrapping with a certain permeability to gases, determining in the interior an inert modified atmosphere formed by a nitrogen and carbon dioxide composition, to which an amount of oxygen from the outside air is added by transfer through the permeable wrapping.

A packaging is thus obtained in which the products are physically protected against outside contact by the wrapping. The modified atmosphere injected into the interior limits the presence of oxygen in contact with the products, making the oxidation very slow. Nevertheless, due to the permeability of the wrapping, the oxygen entering from the outside atmosphere prevents the proliferation of bacteria causing alterations that deteriorate the commercial quality of the product.

Conditions are thus achieved that are particularly favorable for reducing the degradation of the products, favoring the extension of the preservation thereof up to fifteen-day periods, which has a favorable effect for marketing and therefore on cost reduction.

Due to the foregoing, said system object of the invention has certainly advantageous features, acquiring its own identity and a preferred character for the application function for which it is intended.

### Detailed Description of the Invention

The object of the invention relates to a system for packaging minimally processed fresh vegetable products, such as fruit, vegetables and particularly asparagus, with features which allow extending the preservation of such products.

The system consists of covering the application products with a laminar wrapping, which is provided with a material with a certain degree of permeability to gases.

Said laminar cover is particularly provided with a permeability between 2,000 and 35,000 cm³ of oxygen per square meter and per day at atmospheric pressure.

Both the wrapping and the modified atmosphere insulate the products from contact with the outside.

Said modified atmosphere is formed by a mixture of nitrogen (N₂), carbon dioxide (CO₂) and oxygen (O₂), with proportions of 80-100% by volume of nitrogen, 0-20% by volume of carbon dioxide and 0-15% by volume of oxygen.

Due to the foregoing, the packaged product is protected from outside contact by the laminar wrapping and by the presence of the modified atmosphere, which slows down the degradation of the product. Nevertheless, the permeability of the wrapping ensures the presence of a sufficient amount of oxygen preventing the proliferation of bacteria causing the alteration of the product.

Both factors, supporting this invention, are determining for extending the commercial life of the product.

## Claims

1. A system for packaging minimally processed fresh vegetable products, for preserving products as long as possible in a good consumption condition, slowing down their degradation, **characterized in that** the application products are covered with a laminar wrapping having a certain permeability to gases, the products being housed inside said wrapping, immersed in a modified atmosphere formed by nitrogen (N₂), carbon dioxide (CO₂) and oxygen (O₂).

2. A system for packaging minimally processed fresh vegetable products according to claim one, **characterized in that** the laminar wrapping with which the package is covered has a permeability between 2,000 and 35,000 cm³ of oxygen per square meter and per day at atmospheric pressure.

3. A system for packaging minimally processed fresh vegetable products according to claim one, **characterized in that** the modified atmosphere included inside the package comprises a proportion of 80-100% by volume of nitrogen (N₂), 0-20% by volume of carbon dioxide (CO₂) and 0-15% by volume of oxygen (O₂).
